# EUROPÄISCHE PATENTSCHRIFT

(11) **EP 4 227 757 B1**
(45) Veröffentlichungstag und Bekanntmachung des Hinweises auf die Patenterteilung: **09.12.2026**
(21) Anmeldenummer: 23154843.9
(22) Anmeldetag: 03.02.2023
(51) Int. Cl.: G05G 1/08, A01D 43/07, E02F 9/20, G05G 1/02, G05G 9/047

(54) **BEDIENHEBEL ZUR STEUERUNG EINER KOMPONENTE, ARBEITSMASCHINE MIT DEM BEDIENHEBEL UND VERFAHREN ZUM STEUERN DER KOMPONENTE**
CONTROL LEVER FOR CONTROLLING A COMPONENT, WORKING MACHINE COMPRISING THE CONTROL LEVER AND METHOD FOR CONTROLLING THE COMPONENT
LEVIER DE COMMANDE POUR COMMANDER UN COMPOSANT, MACHINE DE TRAVAIL COMPRENANT LE LEVIER DE COMMANDE ET PROCÉDÉ DE COMMANDE DU COMPOSANT

(30) Priorität: 10.02.2022 DE 102022103168
(43) Veröffentlichungstag der Anmeldung: 16.08.2023
(73) Patentinhaber: Maschinenfabrik Bernard Krone GmbH & Co. KG, 48480 Spelle (DE)
(72) Erfinder: Grothus, Daniel, 48488 Emsbüren (DE); Mösker, Markus, 48480 Lünne (DE)

(56) Entgegenhaltungen:
- EP-B1- 1 393 613
- WO-A1-2021/113932
- DE-A1- 102020 001 889
- US-A1- 2013 205 934
- US-A1- 2018 310 475
- US-B2- 10 863 671
- US-B2- 9 777 460

## Beschreibung

Die vorliegende Erfindung betrifft einen Bedienhebel zur Steuerung zumindest einer einstellbaren Komponente einer, insbesondere landwirtschaftlichen, Arbeitsmaschine, mit einem Korpus, der ein Griffteil zum Umgreifen mit einer Greifhand umfasst, sowie ein Kopfteil, das am Griffteil angeordnet ist, wobei der Bedienhebel mindestens ein erstes Steuerelement zum Steuern der Komponente umfasst, wobei das erste Steuerelement einen daumenbedienbaren ersten Einstellknopf zum Einstellen eines vom ersten Steuerelement ausgebbaren ersten Einstellwertes aufweist, der an einer Stirnfläche des Kopfteils angeordnet ist. Die Erfindung betrifft ferner eine Arbeitsmaschine mit einem solchen Bedienhebel sowie ein Verfahren zum Steuern einer Komponente einer solchen Arbeitsmaschine.

In selbstfahrenden Arbeitsmaschinen erfolgt die Bedienung mancher Komponenten, mit denen Gut gefördert und/oder verarbeitet wird, während des Arbeitsbetriebs, d.h. beispielsweise während der Erntefahrt einer landwirtschaftlichen Arbeitsmaschine auf dem Feld, von der Fahrerkabine aus durch den Fahrzeugführer. Da der Fahrzeugführer gleichzeitig die Arbeitsmaschine lenkt, ist die mentale Belastung für ihn während des Feldbetriebs sehr hoch.

Um die Bedienung solcher Komponenten möglichst einfach zu gestalten, werden Bedienelemente für die Komponenten häufig an einem Bedienhebel angeordnet, mit dem die im Arbeitsbetrieb wichtigsten Schalt- und/oder Steuerungsvorgänge durchführbar sind. Dabei wird auf eine einhändige Bedienbarkeit solcher Bedienhebel geachtet, damit der Fahrzeugführer mit seiner freien Hand das Lenkrad halten kann, und so eine sichere Kontrolle über das Fahrzeug behält.

Viele Komponenten solcher Arbeitsmaschinen müssen kontinuierlich überwacht werden, um einen erfolgreichen Arbeitsbetrieb sicherzustellen. Beispielsweise erfordert das Auswerfen von Gütern in einen Transportbehälter eine ständige Überwachung des Auswurfrohrs.

Die Druckschrift US 10,863,671 B2 offenbart eine landwirtschaftliche Erntemaschine, die einen Entladeförderer aufweist, der um eine Schwenkachse zwischen einer Transportposition und einer ausgefahrenen Entladeposition schwenkbar ist. Die landwirtschaftliche Erntemaschine weist ein Steuersystem mit einer Scrollradvorrichtung auf, die ein Scrollrad umfasst. Der Entladeförderer ist durch Betätigung des Scrollrades steuerbar.

Aufgabe der vorliegenden Erfindung ist es, einen neuartigen Bedienhebel für eine Arbeitsmaschine zu schaffen, der eine besonders einfache und intuitive Bedienung einer Komponente der Arbeitsmaschine, beispielsweise eines Auswurfrohrs, ermöglicht. Eine weitere Aufgabe der Erfindung ist es, das Steuern der Komponente, beispielsweise zu einem Auswurfrohr zum Überladen von (Ernte-) Gut von einer solchen Arbeitsmaschine auf einen Transportbehälter, zu vereinfachen.

Die Aufgabe wird gelöst mit einem Bedienhebel mit den Merkmalen des unabhängigen Patentanspruchs 1, mit einer Arbeitsmaschine mit den Merkmalen des unabhängigen Patentanspruchs 6, mit einer landwirtschaftlichen Arbeitsmaschine mit den Merkmalen des unabhängigen Patentanspruchs 7, sowie mit einem Verfahren mit den Merkmalen des unabhängigen Patentanspruchs 15. Vorteilhafte Ausführungsformen sind den abhängigen Ansprüchen entnehmbar.

Dafür wird ein Bedienhebel zur Steuerung zumindest einer einstellbaren Komponente einer Arbeitsmaschine geschaffen. In einer bevorzugten Ausführungsform ist die Arbeitsmaschine eine landwirtschaftliche Arbeitsmaschine, die die Komponente zum Fördern und/oder Verarbeiten von landwirtschaftlichem Erntegut aufweist. Die Arbeitsmaschine ist zudem bevorzugt eine selbstfahrende, landwirtschaftliche Arbeitsmaschine, wie beispielsweise ein Feldhäcksler oder ein Mähdrescher. Prinzipiell ist der Bedienhebel aber auch zur Steuerung von Komponenten anderer Arbeitsmaschinen, wie beispielsweise von von Schleppern gezogenen oder getragenen landwirtschaftlichen Arbeitsmaschinen, forstwirtschaftlichen Arbeitsmaschinen oder Baumaschinen, verwendbar.

Der Bedienhebel weist einen Korpus auf, der einen Griffteil zum Umgreifen mit einer Greifhand umfasst, sowie ein Kopfteil, das am Griffteil angeordnet ist. Zudem umfasst der Bedienhebel ein erstes Steuerelement zum Steuern der Komponente. Dabei weist das erste Steuerelement zum Einstellen eines vom ersten Steuerelement ausgebbaren ersten Einstellwertes einen daumenbedienbaren ersten Einstellknopf auf, der an einer Stirnfläche des Kopfteils angeordnet ist.

Daumenbedienbar bedeutet hierbei, dass der erste Einstellknopf derart vom Griffteil beabstandet ist, dass er bei Umgreifen des Griffteils mit der Greifhand mit dem Daumen der Greifhand bedienbar ist. Dazu ist die Stirnfläche des Kopfteils bei am Griffteil angelegter Greifhand mit dem Daumen der Greifhand erreichbar. Der Bedienhebel ist insofern einhändig mit der Greifhand bedienbar. Infolgedessen kann die freigebliebene weitere Hand für weitere Tätigkeiten, wie zum Beispiel das Bedienen eines Lenkrads, verwendet werden. Prinzipiell ist alternativ zu einer Anordnung des ersten Steuerelements auf der Stirnfläche des Kopfteils jedoch auch eine Anordnung auf einer anderen Fläche des Kopfteils oder am Griffteil des Bedienhebels möglich.

Das erste Steuerelement ist zum Steuern einer Position und/oder eine Schwenkwinkels der Komponente vorgesehen, und der erste Einstellknopf ist entweder als Drehknopf ausgebildet, und reversibel um eine erste Drehachse von einer Grundposition ausgehend um einen ersten Drehwinkel frei verdrehbar, oder als Schiebeknopf ausgebildet, und reversibel von der Grundposition ausgehend entlang eines sich um eine erste Drehachse erstreckenden, bogenförmigen, insbesondere kreisbogenförmigen, ersten Schiebeweges um einen ersten Drehwinkel frei verschiebbar, so dass der erste Einstellknopf in einer durch das Verdrehen oder Verschieben eingestellten Einstellposition verbleibt.

Daher verbleibt der erste Einstellknopf nach dem manuellen Verstellen, insbesondere mit dem Daumen der Greifhand, in der eingestellten Einstellposition. Er wird daher nicht automatisch zurückgestellt. Der Fahrzeugführer kann sich daher darauf verlassen, dass die mit dem ersten Einstellknopf gesteuerte Komponente nur verstellt wird, wenn er diesen bedient. Auch bei einer intensiv zu überwachenden Komponente kann er sich daher anderen Bedien- und Steuervorgängen zuwenden, solange er den Einstellknopf nicht betätigt. Dadurch ist er beim Manövrieren und Steuern der Arbeitsmaschine entlastet.

Erfindungsgemäss ist, dass sich der erste Einstellknopf beim Verdrehen oder Verschieben wenigstens teilweise entlang der Stirnfläche des Kopfteils bewegt. Der Bedienhebel zeichnet sich dafür dadurch aus, dass sich der erste Einstellknopf wenigstens teilweise flächig oberhalb der Stirnfläche des Kopfteils erstreckt. Dadurch kann er beim Verstellen oberhalb der Stirnfläche gleiten.

Der erste Drehwinkel entspricht dabei einem Winkel, den der erste Einstellknopf in der Einstellposition gegenüber der Grundposition einnimmt. Die Grundposition des Drehknopfes stellt hierbei lediglich eine Referenz dar und kann im Prinzip beliebig gewählt sein.

In der Ausführungsform als Schiebeknopf ist der Einstellwert durch Verschieben des Schiebeknopfes entlang des sich um die erste Drehachse erstreckenden bogenförmigen ersten Schiebeweges einstellbar. Prinzipiell kann der Schiebeweg dazu beliebig verlaufen. Das Verschieben erfolgt dabei bevorzugt entlang einer Kontur oder Kulisse, wobei die erste Drehachse eine virtuelle Achse ist. Eine intuitive Steuerung der Komponente wird beispielsweise ermöglicht, wenn der Schiebeweg analog zu einem Verstellweg der angesteuerten Komponente verläuft. In einer besonders bevorzugten Ausführungsform kopiert die Komponente die Bewegung des Schiebeknopfes. Dadurch ist die Verstellung der Komponente auf eine besonders einfache und intuitive Art und Weise möglich.

In der Ausführungsform als Drehknopf ist die Einstellung des Einstellwertes in einer zu der Ausführungsform als Schiebeknopf analogen Art und Weise durch Verdrehen des Drehknopfes möglich. Ein solches erstes Steuerelement ermöglicht daher beispielsweise eine besonders intuitive Steuerung einer um eine Drehachse dreh- oder schwenkbaren Komponente. Auch in dieser Ausführungsform ist es bevorzugt, wenn die Komponente die Drehbewegung des Drehknopfes kopiert. Das bedeutet, dass die Komponente sich in gleichem Maße verdreht wie der Drehknopf.

Die Formulierung frei verdrehen oder frei verschieben meint im Rahmen der Erfindung ein rückstellkraftfreies Verdrehen oder Verschieben in oder gegen eine erste Drehrichtung, d.h. ein Verdrehen oder Verschieben, das frei von einer Rückstellkraft ist. Es versteht sich, dass das Verdrehen oder Verschieben dennoch nicht frei von Reibungskräften ist. Insbesondere kann das Verdrehen oder Verschieben auch gegen einen sich ändernden Widerstand erfolgen, beispielsweise durch Vorsehen von Rastpunkten.

Da das Verdrehen oder Verschieben des ersten Einstellknopfes das Verstellen der Komponente kopiert, erfolgt das Verstellen der Komponente auf eine besonders intuitive Art und Weise. Dabei kann das Verdrehen oder Verschieben kontinuierlich, das heißt stufenlos, oder in diskreten Schritten, das heißt stufenweise, insbesondere durch Vorsehen von Rastpunkten, erfolgen.

Die erste Drehachse weist eine Erstreckungskomponente quer zur Stirnfläche des Kopfteils auf, oder erstreckt sich quer zu dieser. Dabei ist es zudem bevorzugt, dass die erste Drehachse eine gleichbleibende Neigung aufweist, und daher nicht kippbar ist.

In einer bevorzugten Ausführungsform weist der erste Einstellknopf eine Bedienfläche auf, an der ein Tastmittel angeordnet ist, das gegenüber der Bedienfläche des ersten Einstellknopfes zumindest bereichsweise erhaben und/oder zumindest bereichsweise abgesenkt ist, so dass es haptisch ertastbar ist. Die Bedienfläche des ersten Einstellknopfes kann dabei die Fläche definieren, an der der Daumen angesetzt wird, um den ersten Einstellknopf zu verstellen. Sie kann dafür eine Oberflächenkontur aufweisen, die die Griffigkeit erhöht.

Bei dem Tastmittel handelt es sich bevorzugt um eine Erhebung oder Absenkung, durch die die Einstellposition des ersten Einstellknopfes für den Fahrzeugführer sehr schnell und einfach wahrnehmbar ist. Die Erhebung oder Absenkung des Tastmittels erhöht zudem die Griffigkeit des ersten Einstellknopfes, sodass er einfach und komfortabel verdrehbar oder verschiebbar ist.

Bevorzugt ist außerdem, dass das Tastmittel in einer Position am Drehknopf angeordnet ist, die der Einstellposition entspricht. Dadurch ist der erste Drehwinkel haptisch ertastbar und/oder anzeigbar. Da das erste Steuerelement zum Steuern einer Position und/oder eines Schwenkwinkels der Komponente vorgesehen ist, kann der Fahrzeugführer anhand des Tastmittels die Position und/oder den Schwenkwinkel der Komponente sehr gut abschätzen. Eine Steuerung und Überwachung des Schwenkwinkels der Komponente ist daher sehr intuitiv und einfach möglich.

In einer bevorzugten Ausführungsform ist der Bedienhebel als Fahrhebel ausgebildet. In dieser Ausführungsform kann mit dem Bedienhebel die Fahrgeschwindigkeit und/oder Fahrtrichtung der Arbeitsmaschine gesteuert werden. Dazu kann der Bedienhebel in bekannter Bauweise kippbar und/oder verschwenkbar ausgebildet sein.

Das erste Steuerelement umfasst bevorzugt einen Wandler, der dazu eingerichtet ist, den ersten Drehwinkel des ersten Einstellknopfes in den ersten Einstellwert zu wandeln. In einer bevorzugten Ausführungsform ist der Wandler als ein Potentiometer ausgebildet. Ein am Potentiometer abfallender Spannungswert kann als Eingangssignal einer Steuereinheit, die zum Steuern der Komponente vorgesehen ist, genutzt werden.

In einer bevorzugten Ausführungsform umfasst der Bedienhebel ein zweites Steuerelement zum Steuern der Komponente. Auch das zweite Steuerelement umfasst einen zweiten Einstellknopf zum Einstellen eines vom zweiten Steuerelement ausgebbaren zweiten Einstellwertes. Der zweite Einstellknopf ist bei Umgreifen des Griffteils mit der Greifhand mit einem Finger, insbesondere nicht mit dem Daumen, der Greifhand verdrehbar oder verschiebbar. Dazu ist er bevorzugt auf einer Rückseite des Kopfteils angeordnet.

Da für den ersten Einstellknopf der Daumen verwendet wird, kann der zweite Einstellknopf unabhängig - und somit ungestört - von der Bedienung des ersten Einstellknopfes betätigt werden. Dadurch sind der erste Einstellknopf und der zweite Einstellknopf mit derselben Hand unabhängig voneinander bedienbar. Vorteilhaft kann der zweite Einstellknopf dabei derart am Bedienhebel angeordnet sein, dass zu seiner Bedienung keine Positionsveränderung der Greifhand erforderlich ist. Die Rückseite ist dabei an einer der Stirnfläche abgewandten Seite des Kopfteils angeordnet. Um eine einfache Bedienung des zweiten Einstellknopfes zu ermöglichen, ist prinzipiell aber auch eine andere Anordnung des zweiten Einstellknopfes bevorzugt. So kann er auch am Griffteil oder bereichsweise am Griffteil und bereichsweise am Kopfteil angeordnet sein.

Die Begriffe Finger und Daumen beziehen sich im Rahmen der Erfindung auf die Greifhand, mit dem der Bedienhebel bedient wird. Der Begriff Finger schließt dabei den Daumen nicht mit ein, da der Daumen für andere Bedienvorgänge am Bedienhebel eingesetzt wird.

In einer bevorzugten Ausführungsform ist der zweite Einstellknopf als Scrollrad ausgebildet, welches durch Verdrehen um eine, sich insbesondere etwa parallel zu einer Mantelfläche des Scrollrades erstreckende, zweite Drehachse von einer Ausgangsposition ausgehend um einen zweiten Drehwinkel drehbar ist.

Weiterhin umfasst das zweite Steuerelement bevorzugt ein Rückstellmittel, das dazu eingerichtet ist, das Scrollrad beim Loslassen automatisch in seine Ausgangsposition zurückzustellen. Da das Scrollrad beim Loslassen automatisch auf die Ausgangsposition zurückgestellt wird, kann der zweite Einstellwert temporär eingestellt werden.

Zur bequemen Bedienung ist es ferner bevorzugt, dass das Scrollrad mittels eines einzigen Fingers verstellbar, insbesondere verdrehbar oder verschiebbar, ist. Dazu kann er an seinem Umfang haptische Bedienelemente, wie beispielsweise eine Riffelung und/oder Zahnung, aufweisen.

Es ist außerdem bevorzugt, dass das erste Steuerelement und das zweite Steuerelement die genau eine Komponente in Abhängigkeit eines additiven Einstellwertes, gebildet aus dem ersten und zweiten Einstellwert, steuern. Insbesondere kann ein Verstellwinkel aus dem ersten Drehwinkel und dem zweiten Drehwinkel gebildet werden. In die Berechnung können der erste Drehwinkel und der zweite Drehwinkel jeweils unmittelbar oder gewichtet eingehen. Die Position und/oder der Schwenkwinkel der Komponente wird entsprechend dem Verstellwinkel eingestellt. Das erste Steuerelement ist dabei bevorzugt zum Grobeinstellen oder Voreinstellen, und das zweite Steuerelement zum Feineinstellen der Position und/oder des Schwenkwinkels der Komponente vorgesehen.

Die Aufgabe wird ebenfalls gelöst mit einer Arbeitsmaschine mit einem solchen Bedienhebel. Prinzipiell kann dabei im Rahmen der Erfindung jegliche Bauart einer Arbeitsmaschine einen solchen Bedienhebel aufweisen.

In einer bevorzugten Ausführungsform, die die Aufgabe ebenfalls löst, ist die Arbeitsmaschine eine landwirtschaftliche Arbeitsmaschine. Besonders bevorzugt ist sie eine selbstfahrende Erntemaschine, wie beispielsweise ein Feldhäcksler oder ein Mähdrescher.

Die landwirtschaftliche Arbeitsmaschine weist bevorzugt mindestens eine einstellbare Komponente, insbesondere zum Verarbeiten und/oder Fördern von Erntegut, auf. Weiter bevorzugt weist sie einen Bedienhebel auf, an dem ein erstes Steuerelement zum Steuern der Komponente vorgesehen ist. Dabei ist das erste Steuerelement bevorzugt genau einer Komponente oder einer Komponentengruppe desselben Typs vorgesehen.

Zur Steuerung der Komponente weist das erste Steuerelement einen daumenbedienbaren ersten Einstellknopf auf. Dieser ist an einer Stirnfläche des Bedienhebels angeordnet, und reversibel um eine erste Drehachse von einer Grundposition ausgehend um einen ersten Drehwinkel in eine Einstellposition verstellbar.

Die landwirtschaftliche Arbeitsmaschine zeichnet sich dadurch aus, dass sie dazu eingerichtet ist, eine Position und/oder einen Schwenkwinkel der Komponente beim Verstellen des ersten Einstellknopfes korrespondierend zum Drehwinkel des ersten Einstellknopfes einzustellen. Korrespondierend meint hier, dass die Komponente um denselben Schwenkwinkel verschwenkt wird, um den der erste Einstellknopf verdreht oder verschoben wird. Infolgedessen kopiert die Komponente eine Bewegung des ersten Einstellknopfes. Die Verstellung der Komponente erfolgt dahingehend sehr einfach und intuitiv.

Die anzusteuernde Komponente kann sich in Abhängigkeit von einem Betriebszustand der Arbeitsmaschine ändern. Solche Betriebszustände sind beispielsweise Feldbetrieb, Straßenbetrieb, Transportbetrieb, Wartungsbetrieb, Überladen, Vorgewende und/oder Einfahren in den Bestand. Der Bedienhebel und/oder das erste Steuerelement sind daher für eine Vielzahl Steuerungsvorgänge verwendbar.

In einer bevorzugten Ausführungsform ist am Bedienhebel ein zweites Steuerelement zum Steuern der Komponente vorgesehen. Dazu weist das zweite Steuerelement einen zweiten Einstellknopf auf. Dabei sind sowohl der erste Einstellknopf als auch der zweite Einstellknopf zum Einstellen des Schwenkwinkels derselben Komponente vorgesehen. Bevorzugt ist der erste Einstellknopf zum Voreinstellen und/oder Grobeinstellen des Schwenkwinkels der Komponente, und der zweite Einstellknopf zum Feineinstellen des Dreh- oder Schwenkwinkels der Komponente vorgesehen. Das Verstellen des ersten Einstellknopfes ermöglicht eine Grobeinstellung der Komponente, insbesondere um einen großen Schwenkwinkel. Mit dem zweiten Einstellknopf kann eine Feineinstellung der Komponente um den mit dem ersten Einstellknopf eingestellten, insbesondere kleinen, Schwenkwinkel erfolgen.

Bevorzugt weist die Komponente ein um eine Schwenkachse verschwenkbares Auswurfrohr zur Ausgabe von Erntegut in einen Transportbehälter auf, wobei weiterhin bevorzugt ein vom Auswurfrohr eingenommener Schwenkwinkel durch Verstellen des ersten Einstellknopfes grobeinstellbar oder voreinstellbar, und durch Verstellen des zweiten Einstellknopfes ausgehend von dem mit dem ersten Einstellknopf grob- oder voreingestellten Schwenkwinkel feineinstellbar ist. Besonders bevorzugt ist dabei der erste Einstellknopf ein Drehknopf, während weiter bevorzugt der zweite Einstellknopf ein Scrollrad ist. Das Auswurfrohr ist dadurch beim Auswerfen von Erntegut sehr einfach und intuitiv bedienbar.

Der Schwenkwinkel des Auswurfrohrs ist dabei der Winkel, den das Auswurfrohr gegenüber einer Grundstellung aufweist. Die Grundstellung stellt hierbei lediglich eine Referenz dar und kann beliebig gewählt werden. Vorteilhaft wird eine für den Straßenbetrieb vorgesehene Transportstellung als Grundstellung des Auswurfrohrs gewählt.

Bevorzugt entspricht der Schwenkwinkel in einer Ausgangsposition des zweiten Einstellknopfes dem ersten Drehwinkel des ersten Einstellknopfes, und bei verdrehtem zweiten Einstellknopf einem Verstellwinkel aus dem ersten Drehwinkel und dem zweiten Drehwinkel des zweiten Einstellknopfes. Dabei können der erste und der zweite Drehwinkel unmittelbar oder gewichtet in die Berechnung des Verstellwinkels eingehen. Vorzugsweise geht zumindest der erste Drehwinkel unmittelbar in die Berechnung ein, wobei der zweite Drehwinkel gewichtet sein kann. Dadurch ist der mit dem ersten Einstellknopf voreingestellte Schwenkwinkel des Auswurfrohrs um den voreingestellten Schwenkwinkel durch Verdrehen des zweiten Einstellknopfes in einem, insbesondere kleinen, Bereich änderbar.

Bevorzugt ist ein haptisch ertastbares Tastmittel am ersten Einstellknopf im ersten Drehwinkel an diesem angeordnet ist, so dass seine Position am ersten Einstellknopf dem voreingestellten Schwenkwinkel des Auswurfrohrs entspricht. Dadurch zeigt das Tastmittel den voreingestellten Schwenkwinkel an. Dies ist besonders vorteilhaft, da die Bewegung der Komponente korrespondierend zu der Bewegung des ersten Einstellknopfes erfolgt. Aufgrund der haptischen Ausprägung des Tastmittels und der Korrelation des ersten Drehwinkels zum Schwenkwinkel des Auswurfrohrs kann der Fahrzeugführer somit die Position des Auswurfrohrs sehr gut abschätzen, und zwar auch dann noch, wenn der Schwenkwinkel durch Verstellen des zweiten Einstellknopfes feineingestellt ist.

Die landwirtschaftliche Arbeitsmaschine ist weiterhin bevorzugt dazu eingerichtet, das Auswurfrohr bei Loslassen des zweiten Einstellknopfes auf den vom ersten Einstellknopf voreingestellten Schwenkwinkel zurück zu schwenken. Dafür weist das zweite Steuerelement bevorzugt ein Rückstellmittel auf, mit dem der zweite Einstellknopf bei Loslassen in seine Ausgangsposition zurückgestellt wird. Dadurch ist ein temporäres Verschwenken des Auswurfrohrs durch den zweiten Einstellknopf möglich. Besonders bevorzugt ist dabei, dass der zweite Einstellknopf das Auswurfrohr lediglich in einem kleinen Winkelbereich verschwenkt, insbesondere gegenüber dem durch den ersten Einstellknopf voreinstellbaren Winkelbereich. Dazu kann die Verstellbarkeit des zweiten Einstellknopfes begrenzt sein.

Die Arbeitsmaschine ist ebenfalls bevorzugt dazu eingerichtet, eine Geschwindigkeit und/oder eine Beschleunigung des Auswurfrohrs in Abhängigkeit von
- einer Bediengeschwindigkeit des ersten Einstellknopfes,
- einer Bediengeschwindigkeit des zweiten Einstellknopfes,
- einer Differenz zwischen einem bisherigen und einem neuen Schwenkwinkel,
- Eigenschaften des Auswurfrohrs,
- Eigenschaften der landwirtschaftlichen Arbeitsmaschine, und/oder
- weiteren betriebsrelevanten Eigenschaften
einzustellen. Eigenschaften des Auswurfrohrs sind beispielsweise seine Höhe gegenüber einem Rumpf der landwirtschaftlichen Arbeitsmaschine oder seine Länge. Eigenschaften der landwirtschaftlichen Arbeitsmaschine sind beispielsweise ihre Fahrgeschwindigkeit, ihre Fahrtrichtung, eine Durchflussmenge des verarbeiteten Ernteguts oder ihre Neigung gegenüber einer Vertikalen. Weitere betriebsrelevante Eigenschaften sind beispielsweise Wind- und Wetterverhältnisse.

Die Einstellung des Schwenkwinkels des Auswurfrohrs erfolgt bevorzugt in Abhängigkeit von Kennlinien. Die Kennlinien geben dabei vorzugsweise eine Geschwindigkeit und/oder eine Beschleunigung des Auswurfrohrs beim Verschwenken vor. Die Kennlinien können in einem Speicher der landwirtschaftlichen Arbeitsmaschine abgelegt sein, sodass sie für die Steuerung des Auswurfrohrs durch eine Steuereinheit der landwirtschaftlichen Arbeitsmaschine abrufbar sind. Dadurch kann das Auswurfrohr der Position des ersten Einstellknopfes und/oder des zweiten Einstellknopfes, beispielsweise über definierte Beschleunigungs- und/oder Verzögerungsrampen, folgen.

Weitergehend ist es bevorzugt, dass der Bedienhebel in einer Fahrerkabine der landwirtschaftlichen Arbeitsmaschine angeordnet ist. Dabei ist er vorzugsweise als ein Fahrhebel ausgebildet, der auch zum Einstellen einer Fahrgeschwindigkeit und/oder Fahrtrichtung der landwirtschaftlichen Arbeitsmaschine genutzt wird. Dazu ist der Bedienhebel dieser Ausführungsform in bekannter Weise kipp- und/oder schwenkbar ausgebildet. Folglich ist die Steuerung der Komponente beim Fahren der Arbeitsmaschine möglich.

Der Bedienhebel erstreckt sich zudem bevorzugt von einem Anschlussende zu einem Bedienende. Am Anschlussende ist der Bedienhebel in allgemein bekannter Art und Weise an einer Bedienkonsole der landwirtschaftlichen Arbeitsmaschine befestigt. Zudem ist am Anschlussende ein, insbesondere elektrischer, Anschluss des Bedienhebels an die Steuereinheit der landwirtschaftlichen Arbeitsmaschine vorgesehen.

Die Aufgabe wird weiterhin gelöst mit einem Verfahren zum Steuern einer Komponente einer landwirtschaftlichen Arbeitsmaschine, insbesondere einer solchen landwirtschaftlichen Arbeitsmaschine, bei dem zum Grob- oder Voreinstellen der Komponente ein erster Einstellknopf eines Bedienhebels um einen ersten Drehwinkel verdreht oder verschoben wird, wobei die Komponente um einen zum ersten Drehwinkel korrespondierenden Schwenkwinkel verschwenkt wird, und bei dem zum Feineinstellen der Komponente ein zweiter Einstellknopf des Bedienhebels um einen zweiten Drehwinkel verdreht wird. Dabei wird die Komponente ausgehend von dem durch den ersten Einstellknopf eingestellten Schwenkwinkel um einen zum zweiten Drehwinkel korrespondierenden Schwenkwinkel verschwenkt. Durch die korrespondierende Beziehung des Schwenkwinkels ist die Komponente auf eine einfache und komfortable Weise verschwenkbar.

Bevorzugt wird die Komponente beim Loslassen des zweiten Einstellknopfes in den zum eingestellten ersten Drehwinkel korrespondierenden Schwenkwinkel zurück verschwenkt. Dazu weist das zweite Steuerelement vorzugsweise ein Rückstellmittel auf, das den zweiten Einstellknopf auf eine Ausgangsposition zurückverstellt. Dadurch ist eine temporäre Einstellung des Schwenkwinkels der Komponente durch den zweiten Einstellknopf möglich.

Bevorzugt ist außerdem, dass die Komponente beim Grob- oder Voreinstellen um einen ersten Schwenkwinkel in oder gegen eine Schwenkrichtung verschwenkt wird, und dass es beim Feineinstellen um einen zweiten, kleineren Schwenkwinkel in oder gegen die Schwenkrichtung verschwenkt wird. Dafür ist es bevorzugt, dass der mit dem ersten Einstellknopf voreingestellte Schwenkwinkel anhand der Position eines Tastmittels des ersten Einstellknopfes anzeigbar und/oder ertastbar ist. Durch Ertasten des Tastmittels kann der Bediener den Dreh- oder Schwenkwinkel der Komponente sehr gut abschätzen und intuitiv einstellen.

In einer besonders bevorzugten Ausführungsform ist die Komponente eine Komponente eines Feldhäckslers oder Mähdreschers und weist ein Auswurfrohr zum Überladen von Erntegut in einen Transportbehälter auf. Durch das erste Steuerelement und das zweite Steuerelement wird in dieser Ausführungsform der Schwenkwinkel des Auswurfrohrs durch Einstellen des ersten Einstellknopfes und/oder des zweiten Einstellknopfes sehr einfach und komfortabel eingestellt.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1 - 3: in (a) jeweils eine schematisch dargestellte Ausführungsform eines erfindungsgemäßen Bedienhebels mit einem stirnseitig angeordneten ersten Einstellknopf, in (b) jeweils einen Bedienhebel mit einer weiteren Ausführungsform eines stirnseitig angeordneten ersten Einstellknopfes, und in (c) jeweils den Bedienhebel aus (a) oder (b) mit einem rückseitig angeordneten Scrollrad; und
- Fig. 4: in (a) - (c) jeweils einen Ausschnitt aus dem Bedienhebel der Fig. 1 (a) neben einer schematisch dargestellten landwirtschaftlichen Arbeitsmaschine.

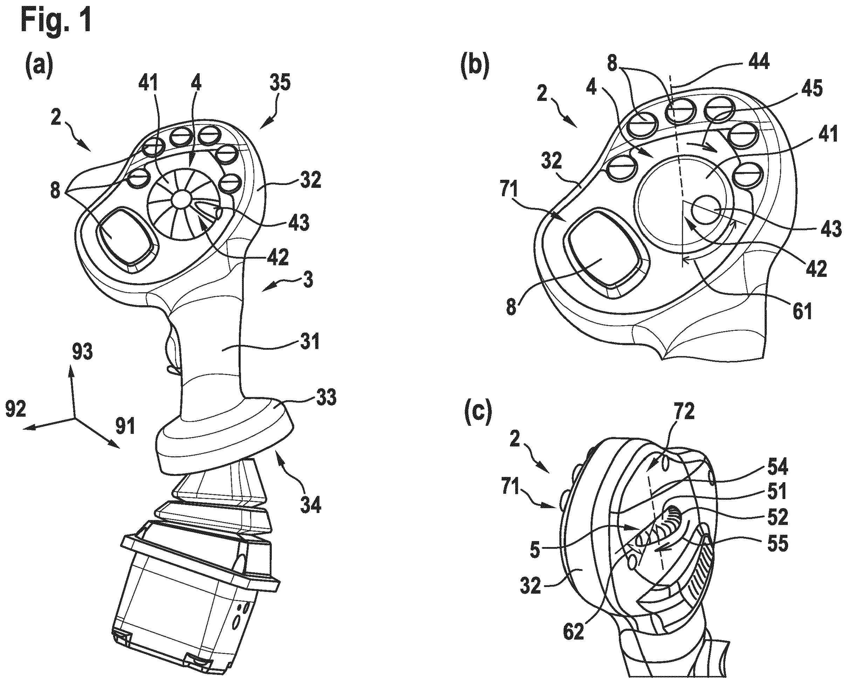

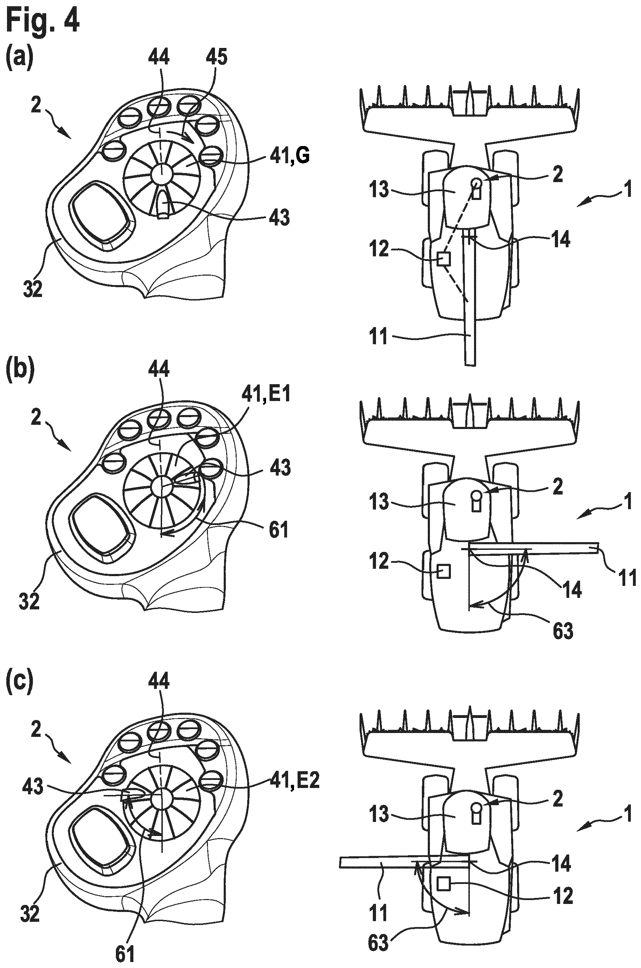

Fig. 1 zeigt eine erste Ausführungsform eines Bedienhebels 2. Wie in Fig. 1 (a) ersichtlich, erstreckt sich der Bedienhebel 2 in eine Erstreckungsrichtung 93 von einem Anschlussende 34 ausgehend zu einem Bedienende 35. Dabei ist das Bedienende 35 ein freies Ende des Bedienhebels. Das Anschlussende 34 ist zur Anbringung des Bedienhebels 2 an eine Bedienkonsole (nicht dargestellt) einer landwirtschaftlichen Arbeitsmaschine 1 (s. Fig. 4) vorgesehen.

Der Bedienhebel 2 ist hier als ein Fahrhebel zur Steuerung der Fahrgeschwindigkeit und/oder Fahrtrichtung der landwirtschaftlichen Arbeitsmaschine 1 ausgeführt. Dazu ist ein Korpus 3 des Bedienhebels 2 in bekannter Bauweise gegenüber der Bedienkonsole in wenigstens eine Richtung 91, 92 quer zur Erstreckungsrichtung 93 kippbar und/oder schwenkbar.

Der Korpus 3 umfasst ein Griffteil 31, das zum Umgreifen mit einer Greifhand vorgesehen ist. Dazu erstreckt sich das Griffteil 31 im Wesentlichen stabförmig und ausgehend vom Anschlussende 34 in die Erstreckungsrichtung 93 des Bedienhebels 2.

Dem Griffteil 31 schließt sich, insbesondere in Erstreckungsrichtung 93 des Bedienhebels 2, ein Kopfteil 32 an, welches das Bedienende 35 ausbildet. Das Kopfteil 32 weist eine komplexe dreidimensionale, insbesondere wenigstens bereichsweise abgerundete, Form auf. An einer dem Bediener beim Bedienen zugewandten Seite weist es eine sich im Wesentlichen flächig, insbesondere eben oder geringfügig gewölbt, erstreckende Stirnfläche 71 auf. An der Stirnfläche 71 sind eine Vielzahl Steuerelemente 4, 5, 8, wie beispielswiese Schalter 8 oder Taster 8, angeordnet. Wenn die Greifhand das Griffteil 31 umgreift, ist die Stirnfläche 71 des Kopfteils 32 mit dem Daumen der Greifhand erreichbar. Dabei können die übrigen Finger der Greifhand das Kopfteil 32 und/oder das Griffteil 31 umgreifen. Das Griffteil 31 und/oder das Kopfteil 32 weisen Anformungen und/oder Abrundungen auf, sodass es ergonomisch ausgebildet und für den Bediener angenehm umfassbar ist. Außerdem weist der Bedienhebel 2 eine Auflage 33 für die Greifhand auf. An der Auflage 33 kann die Greifhand beim Bedienen abgestützt sein, damit das Griffteil 31 während des Betriebs ermüdungsarm gehalten werden kann. Die Auflage 33 ist dafür am Anschlussende 34 angeordnet.

Die in Fig. 1 gezeigte Ausführungsform weist eine Vielzahl Steuerelemente 4, 5, 8 auf, die zum Steuern der Arbeitsmaschine 1 und/oder Komponenten 11 dieser vorgesehen sind. Ein erstes Steuerelement 4 ist hierbei auf der Stirnfläche 71 des Kopfteils 32 angeordnet und weist einen ersten Einstellknopf 41 auf, der hier als Drehknopf 41 ausgebildet ist. Der Drehknopf 41 ist durch Drehung um eine erste Drehachse 44 in und/oder gegen eine erste Drehrichtung 45 drehbar. Er ist um einen ersten Drehwinkel 61 in eine Einstellposition G, E1, E2 verdrehbar. Dabei ist die erste Drehachse 44 quer zur Stirnfläche 71 ausgerichtet. Statt wie hier dargestellt, kann der Drehknopf 41 prinzipiell auch gegenüber der Stirnfläche 71 geneigt ausgerichtet sein und sich um eine gleichermaßen geneigte Drehachse drehen.

Der Drehknopf 41 erstreckt sich wenigstens bereichsweise oberhalb der Stirnfläche 71. Beim Drehen wird er oberhalb der Stirnfläche 71 verfahren oder gleitet entlang der Stirnfläche 71.

Durch Verdrehen des Drehknopfes 41 wird ein vom ersten Steuerelement 4 ausgebbarer erster Einstellwert im oder am ersten Steuerelement 4 eingestellt. Der erste Einstellwert ist ein Maß für den mit dem Drehknopf 41 eingestellten ersten Drehwinkel 61. Dafür weist das erste Steuerelement 4 einen Wandler (nicht dargestellt) auf, der zum Wandeln und/oder Ausgeben des ersten Einstellwertes vorgesehen ist. Als Wandler ist beispielsweise ein Potentiometer verwendbar. In Abhängigkeit von dem ausgegebenen ersten Einstellwert ist die Komponente 11 durch eine Steuereinheit 12 (s. Fig. 4) steuerbar.

Der Drehknopf 41 weist eine Bedienfläche 42 auf. An der Bedienfläche 42 ist ein Tastmittel 43 angeordnet. Die Bedienfläche 42 und/oder das Tastmittel 43 bilden eine Angriffsfläche aus, an der der Daumen zum Verdrehen des Drehknopfes 41 ansetzbar ist. Mit dem Daumen ist daher der Drehknopf 41 um die erste Drehachse 44 verdrehbar. Dafür ist der Drehknopf 41 in einem daumenbedienbaren Abstand zum Griffteil 31 angeordnet.

Das Tastmittel 43 des Bedienhebels 2 der Fig. 1 (a) ist als eine Erhöhung ausgebildet, sodass es haptisch, insbesondere mit dem Daumen, ertastbar ist. Die Einstellposition G, E1, E2 (siehe Fig. 4) des Drehknopfes 41 kann daher anhand des Tastmittels 43 haptisch ertastet werden.

Alternativ dazu kann das Tastmittel 43 auch als Absenkung ausgeführt sein, wie in Fig. 1 (b) dargestellt. Auch durch eine Absenkung ist die Einstellposition G, E1, E2 haptisch ertastbar.

Ein zweites Steuerelement 5 ist auf einer Rückseite 72 des Kopfteils 32 angeordnet, wie in den Fig. 1 (c) dargestellt. Dabei ist die Rückseite 72 die der Stirnfläche 71 abgewandte Seite des Kopfteils 32. Durch diese Anordnung ist das zweite Steuerelement 5 gut mit dem Finger, insbesondere dem Zeige- und/oder Mittelfinger, der Greifhand erreichbar, und zwar auch dann, wenn der Daumen der Greifhand an das erste Steuerelement 4 angelegt ist. Dadurch sind beide Steuerelemente 4, 5 gleichzeitig und/oder unabhängig voneinander bedienbar. Ein umständliches Umgreifen zur abwechselnden oder gleichzeitigen Betätigung der Steuerelemente 4, 5 wird insofern vermieden.

Das zweite Steuerelement 5 wird mittels eines zweiten Einstellknopfes 51, das hier als Scrollrad 51 ausgebildet ist, betätigt. Dazu ist das Scrollrad 51 um eine zweite Drehachse 54 verdrehbar. Diese erstreckt sich etwa parallel zu einer Mantelfläche des Scrollrades 51. Das Scrollrad 51 ist hierzu zumindest teilweise in einen Innenraum des Kopfteils 32 eingebettet.

Durch Verdrehen des Scrollrades 51 wird ein zweiter Einstellwert des zweiten Steuerelementes 5 eingestellt, wobei der zweite Einstellwert ein Maß für einen zweiten Drehwinkel 62 des Scrollrades 51 ist. In analoger Weise zum ersten Steuerelement 4 weist auch das zweite Steuerelement 5 zum Wandeln und/oder Ausgeben des zweiten Einstellwertes einen Wandler auf, der als Potentiometer ausgebildet sein kann. Bei der Einstellung des zweiten Drehwinkels 62 wird das Scrollrad 51 von einer Ausgangsposition um die zweite Drehachse 54 in oder gegen eine zweite Drehrichtung 55 verdreht. Im Gegensatz zum Drehknopf 41 ist das Scrollrad 51 jedoch nicht frei verdrehbar, sondern wird gegen eine Rückstellkraft verdreht. Dafür weist das zweite Steuerelement 5 ein Rückstellmittel (nicht dargestellt), beispielsweise eine Feder, auf. Das Rückstellmittel ist dazu vorgesehen, das Scrollrad 51 bei Loslassen in die Ausgangsposition zurückzustellen. Der zweite Drehwinkel 62 wird somit vom Rückstellmittel bei Loslassen des Scrollrades 62 auf einen der Ausgangsposition entsprechenden Ausgangswert zurück verstellt. Dabei wird auch der zweite Einstellwert automatisch zurückgestellt.

Das Scrollrad 51 ist ferner zur Einfinger-Bedienung eingerichtet. Dabei wird es umfangsseitig mit dem Finger, insbesondere Zeige- und/oder Mittelfinger, angegriffen und verdreht. Es weist dafür an seinem Umfang eine Riffelung 52 auf. Durch die Riffelung 52 kann der Anwender das Scrollrad 51 gegen die Rückstellkraft des Rückstellmittels in einer gegenüber der Ausgangsposition verdrehten Position halten.

In der dargestellten Ausführungsform ist das erste Steuerelement 4 mit dem Daumen und das zweite Steuerelement 5 mit einem Finger, insbesondere Zeige- und/oder Mittelfinger, der Greifhand betätigbar. Die Einstellposition G, E1, E2 (siehe Fig. 4) des Drehknopfes 41 kann dabei anhand des Tastmittels 43 haptisch ertastet werden. Für den Bediener ist die Handhabung der Steuerelemente 4, 5 daher sehr intuitiv und einfach möglich.

Auch das zweite Steuerelement 5 ist zur Steuerung der Komponente 11 vorgesehen. Demnach wird die Komponente 11 gleichzeitig oder unabhängig voneinander durch beide Steuerelemente 4, 5 gesteuert. Da das erste Steuerelement 4 frei drehbar ist, sodass es in der mit dem Daumen eingestellten Einstellposition G, E1, E2 verbleibt, ohne automatisch zurückgestellt zu werden, und das zweite Steuerelement 5 gegen eine Rückstellkraft verdrehbar ist, sodass beim Loslassen in seine Ausgangsposition zurückgestellt wird, kann mit dem ersten Steuerelement 4 ein Schwenkwinkel 63 voreingestellt werden, der mit dem zweiten Steuerelement 5 feineingestellt wird.

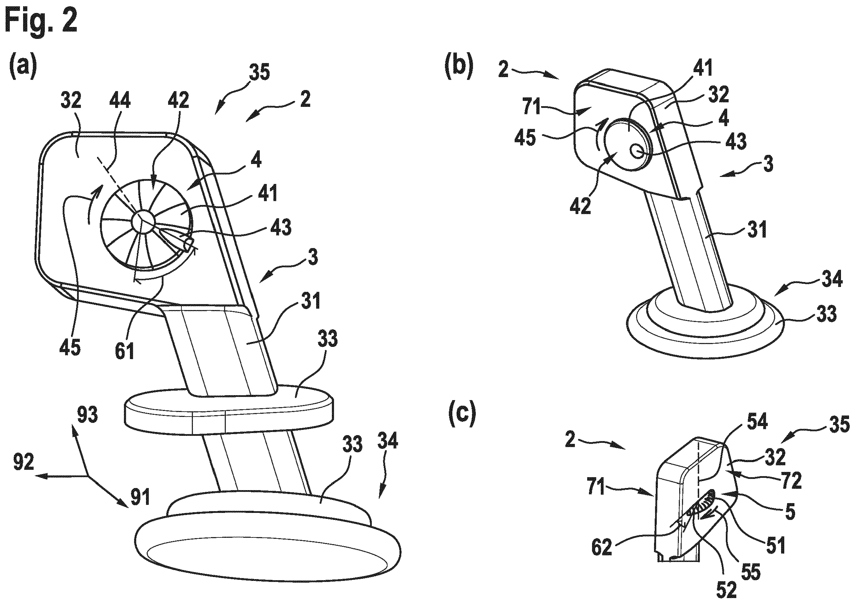

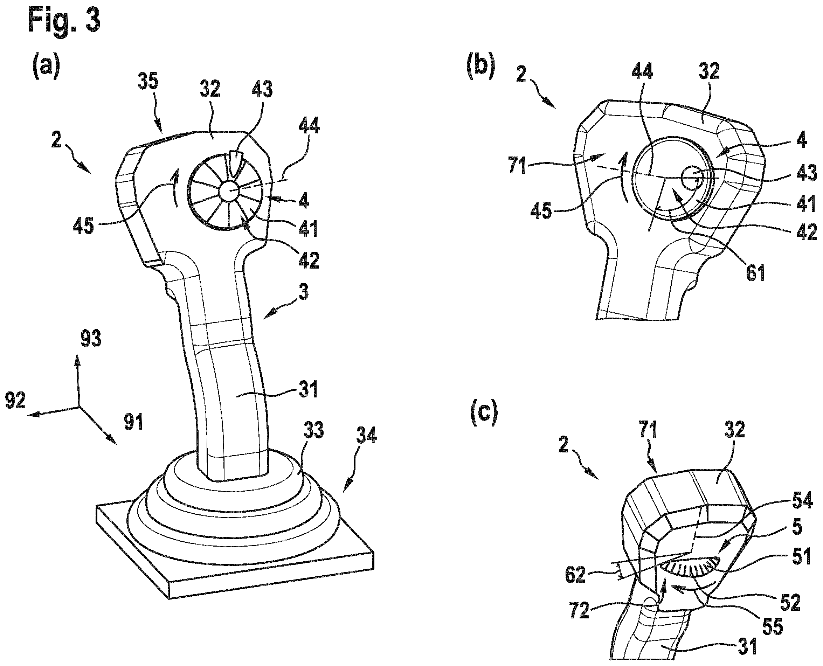

Fig. 2 zeigt eine zweite Ausführungsform und Fig. 3 eine dritte Ausführungsform eines Bedienhebels 2, die jeweils weitgehend mit der ersten Ausführungsform der Fig. 1 übereinstimmen und daher nicht nochmals erläutert werden. Dabei zeigen die Fig. 2 und 3 in (a) jeweils den Bedienhebel 2 mit einem ersten Steuerelement 4, das einen Drehknopf 41 mit einem erhabenen Tastmittel 43 aufweist. Währenddessen zeigen die Fig. 2 und 3 in (b) jeweils ein erstes Steuerelement 4, das einen Drehknopf 41 mit einem abgesenkten Tastmittel 43 aufweist. In Fig. 2 (c) und 3 (c) ist jeweils ein an einer Rückseite 72 angeordnetes zweites Steuerelement 5, aufweisend ein Scrollrad 52, gezeigt.

Die beiden Ausführungsformen unterscheiden sich gegenüber der in Fig. 1 gezeigten ersten Ausführungsform dahingehend, dass die Bedienhebel 2 jeweils im Wesentlichen eine andere Gestaltungsform und/oder Ergonomie aufweisen. Die in den Fig. 1 und 2 gezeigten Ausführungsformen weisen eine Ergonomie auf, die zum Umgreifen mit einer bestimmten Greifhand, und zwar mit der rechten Hand, ausgeprägt ist. Gegenüber den Ausführungsformen der Fig. 1 und 2 kann eine für die linke Hand ausgeprägte Ergonomie durch eine im Wesentlichen spiegelbildliche Ausführungsform dieser Bedienhebel 2, insbesondere ihres Kopfteils 32, erreicht werden. Die in Fig. 3 gezeigte dritte Ausführungsform unterscheidet sich gegenüber den vorigen Ausführungsformen darin, dass sie eine Ergonomie aufweist, die zum Umgreifen sowohl mit der linken als auch mit der rechten Hand geeignet ist. Der Bedienhebel 2 der dritten Ausführungsform kann daher in einer Fahrerkabine prinzipiell sowohl links als auch rechts des Fahrzeugführers angebracht sein.

Außerdem weist die Ausführungsform der Fig. 2 (a) eine zusätzliche Auflage 33 zur Abstützung der Greifhand auf, die vom Anschlussende 34 beabstandet ist, sodass sie etwa mittig am Griffteil 31 angeordnet ist.

Fig. 4 zeigt einen Ausschnitt eines Bedienhebel 2 der ersten Ausführungsform, wobei in (a), (b) und (c) jeweils verschiedene Einstellpositionen G, E1, E2 eines Drehknopfes 41 eines ersten Steuerelements 4 dargestellt sind. In den Darstellungen der Fig. 4 sind exemplarisch die Ausschnitte des Bedienhebels 2 aus der in Fig. 1 (a) gezeigten ersten Ausführungsform mit einem als Erhöhung ausgeführten Tastmittel 43 des ersten Steuerelementes 4 gezeigt. Analog gelten die folgenden Ausführungen für die alternativen Ausführungsformen eines Bedienhebels 2 nach den Fig. 2 - 3.

Neben den Ausschnitten des Bedienhebels 2 ist in den Fig. 4 (a) - (c) jeweils eine landwirtschaftliche Arbeitsmaschine 1 in Form eines Feldhäcksler 1 in einer Vogelperspektive dargestellt. Diese weist eine Komponente 11 auf, die mit einer Steuereinheit 12 in herkömmlicher Art und Weise steuerungstechnisch verbunden ist. Der Bedienhebel 2 ist in einer Fahrerkabine 13 der Arbeitsmaschine 1 angeordnet und ebenfalls mit der Steuereinheit 12 und über diese mit der Komponente 11 in herkömmlicher Art und Weise steuerungstechnisch verbunden.

Die Steuereinheit 12 ist dazu eingerichtet, Steuerungssignale des Bedienhebels 2, insbesondere der Steuerelemente 4, 5, 8 des Bedienhebels 2, zu verarbeiten, und die Komponente 11 dementsprechend anzusteuern. Die Komponente 11 wird daher in Abhängigkeit vom ersten Drehwinkel 61 und/oder vom zweiten Drehwinkel 62 angesteuert.

Die Komponente 11 weist ein Auswurfrohr auf, das um eine Schwenkachse 14 verschwenkbar ist. Dazu umfasst die Komponente 11 einen Aktor (nicht dargestellt), der in bekannter Bauweise an dem Auswurfrohr angreift, um dieses zu verschwenken. Dabei kann die Komponente 11 weitere Bauteile, beispielsweise einen Drehkranz, umfassen, wobei jedoch das Auswurfrohr zur Erläuterung der Erfindung ausreichend ist. Daher werden die Begriffe Komponente 11 und Auswurfrohr 11 synonym verwendet.

Das Auswurfrohr 11 wird auf diese Weise anhand des ersten Drehwinkels 61 und/oder des zweiten Drehwinkels 62 verschwenkt. Dabei ist durch Verdrehen des Drehknopfs 41 und/oder durch Verdrehen des Scrollrads 51 ein Schwenkwinkel 63, den das Auswurfrohr 11 einnimmt, einstellbar.

Der Schwenkwinkel 63 ist durch den Drehknopf 41 voreinstellbar und optional durch das Scrollrad 51 feineinstellbar. Die Steuereinheit 12 verschwenkt das Auswurfrohr 11 in Abhängigkeit von einem Verstellwinkel, der sich aus dem durch Drehen des ersten Drehknopfes 41 um den ersten Drehwinkel 61 ergebenden ersten Einstellwert und aus dem durch Drehen des zweiten Drehknopfes 51 um den zweiten Drehwinkel 62 ergebenden zweiten Einstellwert berechnet. Das bedeutet, indem der Drehknopf 41 in eine Einstellposition G, E1, E2 verdreht wird, sodass das Auswurfrohr 11 um den dem ersten Einstellwert entsprechenden Schwenkwinkel 63 verschwenkt wird, wird der Schwenkwinkel 63 optional durch Verdrehen des Scrollrades 51, insbesondere in einem kleinen Winkelbereich, um den voreingestellten Schwenkwinkel 63 feineingestellt werden.

Die Einstellung des Schwenkwinkels 63 des Auswurfrohrs 11 kann zudem in Abhängigkeit von Kennlinien erfolgen. Die Kennlinien geben eine Geschwindigkeit und/oder eine Beschleunigung des Auswurfrohrs 11 beim Verschwenken vor. Dazu werden sie aus einem Speicher der Steuereinheit 12 bei Bedarf abgerufen.

Wie in Fig 4 dargestellt, entspricht eine Einstellposition G, E1, E2 des ersten Einstellknopfes 41 dabei dem mit dem Drehknopf 41 voreingestellten Schwenkwinkel 63 des Auswurfrohrs 11. So ist in Fig. 4 (a) der Drehknopf 41 in eine Grundposition G verdreht und das Tastmittel 43 korrespondierend zum Auswurfrohr 11 ausgerichtet. Die hier dargestellte Grundposition G entspricht einer Transportstellung des Auswurfrohrs 11 bei einem Straßenbetrieb der Arbeitsmaschine 1. Prinzipiell kann auch jede andere beliebige Grundposition G gewählt werden, da sie lediglich als Referenz zur Bestimmung des ersten Drehwinkels 61 des Drehknopfes 41 dient und das Auswurfrohr 11 der Einstellposition G, E1, E2 des Drehknopfes 41 folgt. Demnach weisen der Schwenkwinkel 63 und der erste Drehwinkel 61 in der Grundposition G den Winkelwert 0° auf.

In den Fig. 4 (b) und (c) ist jeweils der erste Drehknopf 41 gegenüber der Grundposition G in eine Einstellposition E1, E2 um den ersten Drehwinkel 61 verdreht, wobei das Auswurfrohr 11 um den dem ersten Drehwinkel 61 entsprechenden Schwenkwinkel 63 um die Schwenkachse 14 verschwenkt ist. Sichtbar ist, dass der Schwenkwinkel 63 bei sich in einer Ausgangsposition befindlichem Scrollrad 51 dem ersten Drehwinkel 61 entspricht, sodass die Bewegung des Auswurfrohrs 11 der Bewegung des Drehknopfes 41 unmittelbar folgt. Bei in Ausgangsposition befindendem Scrollrad 51 kopiert daher der Schwenkwinkel 63 des Auswurfrohrs 11 den ersten Drehwinkel 61 des Drehknopfes 41. Bei dieser Ausführungsform kann der Bediener daher die Position und/oder den Schwenkwinkel 63 des Auswurfrohrs am Tastmittel 43 des Drehknopfes 41 intuitiv erfassen, auch wenn der Bediener das Auswurfrohr 11 nicht kontinuierlich überwacht. Durch Verdrehen des Scrollrades 51 ausgehend von einer Ausgangsposition kann der Schwenkwinkel 63 des Auswurfrohrs 11, insbesondere in geringem Maße, zudem feineingestellt werden, wobei das Scrollrad 51 beim Loslassen automatisch zurückgestellt wird.

Gegenüber der Transportstellung (s. Fig. 4 (a)) sind der Drehknopf 41 und das Auswurfrohr 11 in Fig. 4 (b) gegen den Uhrzeigersinn und in Fig. 4 (c) mit dem Uhrzeigersinn verschwenkt. Durch die erhabene oder vertiefte Ausprägung des Tastmittels 43 sind der voreingestellte erste Drehwinkel 61 und damit auch der Schwenkwinkel 63 des Auswurfrohrs anhand der Position des Tastmittels 43 auf dem Drehknopf 41 ablesbar und/oder erstastbar. Dadurch kann der Schwenkwinkel 63 des Auswurfrohrs 11 komfortabel und intuitiv mit dem Bedienhebel 2 von der Fahrerkabine 13 aus eingestellt und/oder überwacht werden.

Vorteilhaft dabei kann das Auswurfrohr 11 im Feldbetrieb der Arbeitsmaschine 1 in Richtung eines neben der Arbeitsmaschine 1 fahrendes Transportfahrzeug (nicht dargestellt) intuitiv ausgerichtet werden. Der Fahrer wird im Feldbetrieb durch die intuitive Ansteuerung des Auswurfrohrs 11 in besonderem Maße entlastet, da das Auswurfrohr 11 nachteilig für die Orientierung des Fahrers oftmals in Fahrtrichtung hinter der Fahrerkabine 13 angeordnet ist und er dann beim Manövrieren der Arbeitsmaschine 1 keinen ununterbrochenen Sichtkontakt zu dem Auswurfrohr 11 wahren kann.

## Patentansprüche

1. Bedienhebel (2) zur Steuerung zumindest einer einstellbaren Komponente (11) einer, insbesondere landwirtschaftlichen, Arbeitsmaschine (1), mit einem Korpus (3), der ein Griffteil (31) zum Umgreifen mit einer Greifhand umfasst, sowie ein Kopfteil (32), das am Griffteil (31) angeordnet ist, wobei der Bedienhebel (2) mindestens ein erstes Steuerelement (4) zum Steuern der Komponente (11) umfasst, wobei das erste Steuerelement (4) einen daumenbedienbaren ersten Einstellknopf (41) zum Einstellen eines vom ersten Steuerelement (4) ausgebbaren ersten Einstellwertes aufweist, der an einer Stirnfläche (71) des Kopfteils (32) angeordnet ist, wobei das erste Steuerelement (4) zum Steuern einer Position und/oder eines Schwenkwinkels (63) der Komponente (11) vorgesehen ist,
**dadurch gekennzeichnet, dass**
sich der erste Einstellknopf (41) wenigstens teilweise flächig oberhalb der Stirnfläche (71) des Kopfteils (32) erstreckt,
wobei der erste Einstellknopf (41)
• entweder als Drehknopf ausgebildet ist, und reversibel um eine erste Drehachse (44) von einer Grundposition (G) ausgehend um einen ersten Drehwinkel (61) frei verdrehbar ist,
• oder als Schiebeknopf ausgebildet ist, und reversibel von der Grundposition (G) ausgehend entlang eines sich um eine erste Drehachse (44) erstreckenden, bogenförmigen, insbesondere kreisbogenförmigen, ersten Schiebeweges um einen ersten Drehwinkel (61) frei verschiebbar ist,
so dass der erste Einstellknopf (41) in einer durch das Verdrehen oder Verschieben eingestellten Einstellposition (E1, E2) verbleibt.

2. Bedienhebel (2) nach Anspruch 1, **dadurch gekennzeichnet, dass** der Einstellknopf (41) eine Bedienfläche (42) aufweist, an der ein Tastmittel (43) angeordnet ist, das gegenüber der Bedienfläche (42) des ersten Einstellknopfes (41) zumindest bereichsweise erhaben und/oder zumindest bereichsweise abgesenkt ist, so dass es haptisch ertastbar ist.

3. Bedienhebel (2) nach einem der vorherigen Ansprüche, **dadurch gekennzeichnet, dass** er ein zweites Steuerelement (5) zum Steuern der Komponente (11) umfasst, wobei das zweite Steuerelement (5) einen zweiten Einstellknopf (51) zum Einstellen eines vom Steuerelement (5) ausgebbaren zweiten Einstellwertes aufweist, der an einer Rückseite (72) des Kopfteils (32) angeordnet ist, wobei der zweite Einstellknopf (51) bei Umgreifen des Griffteils (31) mit der Greifhand mit einem Finger, insbesondere nicht mit dem Daumen, der Greifhand verstellbar ist.

4. Bedienhebel (2) nach Anspruch 3, **dadurch gekennzeichnet, dass** der zweite Einstellknopf (51) als Scrollrad (51) ausgebildet ist, welches durch Verdrehen um eine, sich insbesondere etwa parallel zu einer Mantelfläche des Scrollrades (51) erstreckende, zweite Drehachse (54) von einer Ausgangsposition ausgehend um einen zweiten Drehwinkel (62) drehbar ist, wobei das zweite Steuerelement (5) zudem ein Rückstellmittel umfasst, das dazu eingerichtet ist, das Scrollrad (51) beim Loslassen automatisch in seine Ausgangsposition zurückzustellen.

5. Bedienhebel (2) nach einem der Ansprüche 3 - 4, **dadurch gekennzeichnet, dass** das erste Steuerelement (4) zum Grobeinstellen oder Voreinstellen, und das zweite Steuerelement (5) zum Feineinstellen eines Schwenkwinkels (63) der Komponente (11) vorgesehen ist.

6. Arbeitsmaschine (1) mit einem Bedienhebel (2) nach einem der vorherigen Ansprüche.

7. Landwirtschaftliche Arbeitsmaschine (1) nach Anspruch 6, mit mindestens einer einstellbaren Komponente (11), insbesondere zum Verarbeiten und/oder Fördern von landwirtschaftlichem Erntegut, und einem Bedienhebel (2), an dem ein erstes Steuerelement (4) zum Steuern der Komponente (11) vorgesehen ist, wobei das erste Steuerelement (4) einen daumenbedienbaren ersten Einstellknopf (41) aufweist, der an einer Stirnfläche des Bedienhebels (2) angeordnet ist, und der reversibel um eine erste Drehachse (44) von einer Grundposition (G) ausgehend um einen ersten Drehwinkel (61) in eine Einstellposition (E1, E2) verstellbar ist, **dadurch gekennzeichnet, dass** die landwirtschaftliche Arbeitsmaschine (1) dazu eingerichtet ist, eine Position und/oder einen Schwenkwinkel (63) der Komponente (11) beim Verstellen des ersten Einstellknopfes (41) korrespondierend zum ersten Drehwinkel (61) des ersten Einstellknopfes (41) einzustellen.

8. Landwirtschaftliche Arbeitsmaschine (1) nach einem der Ansprüche 6 - 7, **dadurch gekennzeichnet, dass** am Bedienhebel (2) ein zweites Steuerelement (5) zum Steuern der Komponente (11) vorgesehen ist, wobei das zweite Steuerelement (5) einen zweiten Einstellknopf (51) aufweist, wobei der erste Einstellknopf (41) zum Voreinstellen und/oder Grobeinstellen des Schwenkwinkels (63) der Komponente (11), und der zweite Einstellknopf (51) zum Feineinstellen des Schwenkwinkels (63) der Komponente (11) vorgesehen ist.

9. Landwirtschaftliche Arbeitsmaschine (1) nach Anspruch 8, **dadurch gekennzeichnet, dass** die Komponente (11) ein um eine Schwenkachse (14) verschwenkbares Auswurfrohr (11) zur Ausgabe von Erntegut in einen Transportbehälter aufweist, wobei ein vom Auswurfrohr (11) eingenommener Schwenkwinkel (63) durch Verstellen des ersten Einstellknopfes (41) grobeinstellbar oder voreinstellbar, und durch Verstellen des zweiten Einstellknopfes (51) ausgehend von dem mit dem ersten Einstellknopf (41) grob- oder voreingestellten Schwenkwinkel (63) feineinstellbar ist.

10. Landwirtschaftliche Arbeitsmaschine (1) nach einem der Ansprüche 8 - 9, **dadurch gekennzeichnet, dass** der Schwenkwinkel (63) in einer Ausgangsposition des zweiten Einstellknopfes (51) dem ersten Drehwinkel (61) des ersten Einstellknopfes (4), und bei verdrehtem zweitem Einstellknopf (51) einem Verstellwinkel aus dem ersten Drehwinkel (61) und dem, insbesondere gewichteten, zweiten Drehwinkel (62) des zweiten Einstellknopfes (62) entspricht.

11. Landwirtschaftliche Arbeitsmaschine (1) nach einem der Ansprüche 9 - 10, **dadurch gekennzeichnet, dass** ein haptisch ertastbares Tastmittel (43) am ersten Einstellknopf (4) im ersten Drehwinkel (61) an diesem angeordnet ist, so dass seine Position am ersten Einstellknopf (41) dem voreingestellten Schwenkwinkel (63) des Auswurfrohrs (11) entspricht.

12. Landwirtschaftliche Arbeitsmaschine (1) nach einem der Ansprüche 9 - 11, **dadurch gekennzeichnet, dass** sie dazu eingerichtet ist, das Auswurfrohr (11) bei Loslassen des zweiten Einstellknopfes (51) auf den vom ersten Einstellknopf (41) voreingestellten Schwenkwinkel (63) zurück zu schwenken.

13. Landwirtschaftliche Arbeitsmaschine (1) nach einem der Ansprüche 9 - 12, **dadurch gekennzeichnet, dass** sie dazu eingerichtet ist, eine Geschwindigkeit und/oder eine Beschleunigung des Auswurfrohrs (11) in Abhängigkeit von
• einer Bediengeschwindigkeit des ersten Einstellknopfes (41),
• einer Bediengeschwindigkeit des zweiten Einstellknopfes (51),
• einer Differenz zwischen einem bisherigen und einem neuen Schwenkwinkel (63),
• Eigenschaften des Auswurfrohrs (11), insbesondere Gewicht, Länge und/oder Höhe gegenüber dem Boden,
• Eigenschaften der landwirtschaftlichen Arbeitsmaschine (1), insbesondere Fahrgeschwindigkeit oder Fahrtrichtung, und/oder
• weiteren betriebsrelevanten Eigenschaften, insbesondere Wind- und Wetterverhältnisse,
einzustellen.

14. Landwirtschaftliche Arbeitsmaschine (1) nach einem der Ansprüche 9 - 13, **dadurch gekennzeichnet, dass** die Einstellung des Schwenkwinkels (63) des Auswurfrohrs (11) in Abhängigkeit von Kennlinien erfolgt, wobei die Kennlinien eine Geschwindigkeit und/oder eine Beschleunigung des Auswurfrohrs (1) beim Verschwenken vorgeben.

15. Verfahren zum Steuern einer Komponente (11) einer Arbeitsmaschine (1), nach einem der Ansprüche 6 - 14, wobei diese Ansprüche von einem der Ansprüche 3 - 5 abhängen, bei dem zum Grob- oder Voreinstellen der Komponente (11) ein erster Einstellknopf (4) eines Bedienhebels (2) um einen ersten Drehwinkel (61) verdreht oder verschoben wird, wobei die Komponente (11) um einen zum ersten Drehwinkel (61) korrespondierenden Schwenkwinkel (63) verschwenkt wird, und bei dem zum Feineinstellen der Komponente (11) ein zweiter Einstellknopf (5) des Bedienhebels (2) um einen zweiten Drehwinkel (62) verdreht wird, wobei die Komponente (11) ausgehend von dem durch den ersten Einstellknopf (4) eingestellten Schwenkwinkel (63) um einen zum zweiten Drehwinkel (62) korrespondierenden Schwenkwinkel (63) verschwenkt wird.

16. Verfahren nach Anspruch 15, **dadurch gekennzeichnet, dass** die Komponente (11) beim Loslassen des zweiten Einstellknopfes (5) in den zum eingestellten ersten Drehwinkel (61) korrespondierenden Schwenkwinkel (63) zurück verschwenkt wird.

## Claims

1. Operating lever (2) for controlling at least one adjustable component (11) of an, in particular agricultural, machine (1), comprising a body (3) which includes a handle part (31) for gripping with a gripping hand, and a head part (32) which is arranged on the handle part (31), the operating lever (2) comprising at least one first control element (4) for controlling the component (11), the first control element (4) having a thumb-operable first adjustment knob (41) for adjusting a first adjustment value that can be output by the first control element (4), which knob is arranged on an end face (71) of the head part (32), the first control element (4) being provided for controlling a position and/or a pivot angle (63) of the component (11),
**characterized in that**
the first adjustment knob (41) extends at least partially over the surface above the end face (71) of the head part (32), the first adjustment knob (41)
• being designed either as a rotary knob, and being freely rotatable reversibly about a first axis of rotation (44) from a basic position (G) by a first angle of rotation (61),
• or being designed as a sliding knob, and being freely displaceable reversibly from the basic position (G) along an arc-shaped, in particular circular arc-shaped, first sliding path extending about a first axis of rotation (44) by a first angle of rotation (61),
so that the first adjustment knob (41) remains in an adjustment position (E1, E2) that is set by the rotation or displacement.

2. Operating lever (2) according to claim 1, **characterized in that** the adjustment knob (41) has an operating surface (42) on which a sensing means (43) is arranged which, relative to the operating surface (42) of the first adjustment knob (41), is raised at least in some areas and/or lowered at least in some areas so that it can be felt haptically.

3. Operating lever (2) according to any of the preceding claims,
**characterized in that** it comprises a second control element (5) for controlling the component (11), the second control element (5) having a second adjustment knob (51) for adjusting a second adjustment value that can be output by the control element (5), which knob is arranged on a rear side (72) of the head part (32), the second adjustment knob (51) being movable with a finger, in particular not with the thumb, of the gripping hand when gripping the handle part (31) with the gripping hand.

4. Operating lever (2) according to claim 3, **characterized in that** the second adjustment knob (51) is designed as a scroll wheel (51) which can be rotated from a starting position by a second angle of rotation (62) by rotating it about a second axis of rotation (54) that extends in particular approximately parallel to a lateral surface of the scroll wheel (51), the second control element (5) also including a return means which is configured to automatically return the scroll wheel (51) to its starting position when released.

5. Operating lever (2) according to any of claims 3-4, **characterized in that** the first control element (4) is provided for coarse adjustment or pre-adjustment, and the second control element (5) is provided for fine adjustment of a pivot angle (63) of the component (11).

6. Machine (1) having an operating lever (2) according to any of the preceding claims.

7. Agricultural machine (1) according to claim 6, having at least one adjustable component (11), in particular for processing and/or conveying agricultural crops, and an operating lever (2) on which a first control element (4) for controlling the component (11) is provided, the first control element (4) having a thumb-operable first adjustment knob (41) which is arranged on an end face of the operating lever (2), and which is reversibly movable about a first axis of rotation (44) from a basic position (G) by a first angle of rotation (61) to an adjustment position (E1, E2), **characterized in that** the agricultural machine (1) is configured to adjust a position and/or a pivot angle (63) of the component (11), when the first adjustment knob (41) is moved, corresponding to the first angle of rotation (61) of the first adjustment knob (41).

8. Agricultural machine (1) according to any of claims 6-7,
**characterized in that** a second control element (5) for controlling the component (11) is provided on the operating lever (2), the second control element (5) having a second adjustment knob (51), the first adjustment knob (41) being provided for pre-adjustment and/or coarse adjustment of the pivot angle (63) of the component (11), and the second adjustment knob (51) being provided for fine adjustment of the pivot angle (63) of the component (11).

9. Agricultural machine (1) according to claim 8, **characterized in that** the component (11) has a discharge tube (11) pivotable about a pivot axis (14) for outputting crops into a transport container, a pivot angle (63) assumed by the discharge tube (11) being coarsely adjustable or pre-adjustable by moving the first adjustment knob (41), and being finely adjustable by moving the second adjustment knob (51) starting from the pivot angle (63) that has been coarsely adjusted or pre-adjusted with the first adjustment knob (41).

10. Agricultural machine (1) according to any of claims 8-9,
**characterized in that** the pivot angle (63) in a starting position of the second adjustment knob (51) corresponds to the first angle of rotation (61) of the first adjustment knob (4) and, when the second adjustment knob (51) is rotated, corresponds to an adjustment angle consisting of the first angle of rotation (61) and the, in particular weighted, second angle of rotation (62) of the second adjustment knob (62).

11. Agricultural machine (1) according to any of claims 9-10,
**characterized in that** a sensing means (43) that can be felt haptically is arranged on the first adjustment knob (4) at the first angle of rotation (61) thereof, so that its position on the first adjustment knob (41) corresponds to the pre-adjusted pivot angle (63) of the discharge tube (11).

12. Agricultural machine (1) according to any of claims 9-11,
**characterized in that** it is configured to pivot the discharge tube (11) back to the pivot angle (63) pre-adjusted by the first adjustment knob (41) when the second adjustment knob (51) is released.

13. Agricultural machine (1) according to any of claims 9-12,
**characterized in that** it is configured to adjust the speed and/or acceleration of the discharge tube (11) depending on
• an operating speed of the first adjustment knob (41),
• an operating speed of the second adjustment knob (51),
• a difference between a previous and a new pivot angle (63),
• characteristics of the discharge tube (11), in particular weight, length and/or height relative to the ground,
• characteristics of the agricultural machine (1), in particular driving speed or direction of travel, and/or
• other operationally relevant characteristics, in particular wind and weather conditions.

14. Agricultural machine (1) according to any of claims 9-13,
**characterized in that** the adjustment of the pivot angle (63) of the discharge tube (11) is carried out depending on characteristic curves, the characteristic curves specifying a speed and/or an acceleration of the discharge tube (1) during pivoting.

15. Method for controlling a component (11) of a machine (1), according to any of claims 6-14, wherein these claims depend on any of claims 3-5, in which, for coarse or pre-adjustment of the component (11), a first adjustment knob (4) of an operating lever (2) is rotated or displaced by a first angle of rotation (61), wherein the component (11) is pivoted by a pivot angle (63) corresponding to the first angle of rotation (61), and in which, for fine adjustment of the component (11), a second adjustment knob (5) of the operating lever (2) is rotated by a second angle of rotation (62), wherein, starting from the pivot angle (63) set by the first adjustment knob (4), the component (11) is pivoted by a pivot angle (63) corresponding to the second angle of rotation (62).

16. Method according to claim 15, **characterized in that** when the second adjustment knob (5) is released, the component (11) pivots back to the pivot angle (63) corresponding to the set first angle of rotation (61).

## Revendications

1. Levier d'actionnement (2) destiné à commander au moins un composant (11) réglable d'une machine de travail (1), en particulier agricole, comportant un corps (3) qui comprend une partie de préhension (31) destinée à être saisie par une main de préhension, ainsi qu'une partie supérieure (32) disposée sur la partie de préhension (31), dans lequel le levier d'actionnement (2) comprend au moins un premier élément de commande (4) destiné à commander le composant (11), dans lequel le premier élément de commande (4) présente un premier bouton de réglage (41) actionnable par le pouce pour le réglage d'une première valeur de réglage fournie par le premier élément de commande (4), lequel premier bouton de réglage est disposé sur une face frontale (71) de la partie supérieure (32), dans lequel le premier élément de commande (4) est prévu pour la commande d'une position et/ou d'un angle de pivotement (63) du composant (11),
**caractérisé en ce que**
le premier bouton de réglage (41) s'étend au moins partiellement à plat au-dessus de la face frontale (71) de la partie supérieure (32),
dans lequel le premier bouton de réglage (41)
• est conçu sous la forme d'un bouton rotatif et peut tourner librement de manière réversible autour d'un premier axe de rotation (44) selon un premier angle de rotation (61), à partir d'une position initiale (G),
• ou est conçu sous la forme d'un bouton coulissant, et peut être coulissé librement de manière réversible selon un premier angle de rotation (61), à partir de la position initiale (G), le long d'une première course de coulissement en forme d'arc, en particulier en forme d'arc de cercle, s'étendant autour d'un premier axe de rotation (44),
de sorte que le premier bouton de réglage (41) reste dans une position de réglage (E1, E2) définie par la rotation ou le coulissement.

2. Levier d'actionnement (2) selon la revendication 1, **caractérisé en ce que** le bouton de réglage (41) présente une surface de commande (42) sur laquelle est disposé un moyen palpeur (43) qui, par rapport à la surface de commande (42) du premier bouton de réglage (41), est surélevé au moins dans certaines zones et/ou est abaissé au moins dans certaines zones, de sorte qu'il est perceptible au toucher.

3. Levier d'actionnement (2) selon l'une des revendications précédentes,
**caractérisé en ce qu'**il comprend un second élément de commande (5) destiné à commander le composant (11), dans lequel le second élément de commande (5) présente un second bouton de réglage (51) destiné à régler une seconde valeur de réglage fournie par l'élément de commande (5), lequel second bouton de réglage est disposé sur une face arrière (72) de la partie supérieure (32), dans lequel le second bouton de réglage (51) peut être réglé, lors de la saisie de la partie de préhension (31) avec la main de préhension à l'aide d'un doigt de la main de préhension, en particulier sans utiliser le pouce.

4. Levier d'actionnement (2) selon la revendication 3, **caractérisé en ce que** le second bouton de réglage (51) est conçu comme une molette de défilement (51) qui, par rotation autour d'un second axe de rotation (54) s'étendant en particulier à peu près parallèlement à une surface latérale de la molette de défilement (51), peut tourner selon un second angle de rotation (62) à partir d'une position de départ, dans lequel le second élément de commande (5) comprend en outre un moyen de rappel conçu pour ramener automatiquement la molette de défilement (51) dans sa position de départ lorsqu'on la relâche.

5. Levier d'actionnement (2) selon l'une des revendications 3 à 4,
**caractérisé en ce que** le premier élément de commande (4) est prévu pour le réglage grossier ou le préréglage, et le second élément de commande (5) est prévu pour le réglage fin d'un angle de pivotement (63) du composant (11).

6. Machine de travail (1) comportant un levier d'actionnement (2) selon l'une des revendications précédentes.

7. Machine de travail agricole (1) selon la revendication 6, comportant au moins un composant (11) réglable, en particulier destiné au traitement et/ou au transport d'une récolte agricole, et un levier d'actionnement (2) sur lequel est prévu un premier élément de commande (4) destiné à commander le composant (11), dans lequel le premier élément de commande (4) présente un premier bouton de réglage (41) actionnable par le pouce, lequel est disposé sur une face frontale du levier d'actionnement (2) et peut être réglé de manière réversible sur une position de réglage (E1, E2), selon un premier angle de rotation (61), autour d'un premier axe de rotation (44), à partir d'une position initiale (G), **caractérisée en ce que** la machine de travail agricole (1) est conçue pour régler une position et/ou un angle de pivotement (63) du composant (11) lors du déplacement du premier bouton de réglage (41), de manière correspondante au premier angle de rotation (61) du premier bouton de réglage (41).

8. Machine de travail agricole (1) selon l'une des revendications 6 à 7,
**caractérisée en ce qu'**un second élément de commande (5) destiné à commander le composant (11) est prévu sur le levier d'actionnement (2), dans lequel le second élément de commande (5) présente un second bouton de réglage (51), dans lequel le premier bouton de réglage (41) est prévu pour le préréglage et/ou le réglage grossier de l'angle de pivotement (63) du composant (11), et le second bouton de réglage (51) est prévu pour le réglage fin de l'angle de pivotement (63) du composant (11).

9. Machine de travail agricole (1) selon la revendication 8,
**caractérisée en ce que** le composant (11) présente un tube d'éjection (11) pouvant pivoter autour d'un axe de pivotement (14) pour le déversement de la récolte dans un conteneur de transport, dans lequel un angle de pivotement (63) formé par le tube d'éjection (11) peut être réglé grossièrement ou préréglé en déplaçant le premier bouton de réglage (41), et peut être réglé finement en réglant le second bouton de réglage (51) à partir de l'angle de pivotement (63) réglé grossièrement ou préréglé à l'aide du premier bouton de réglage (41).

10. Machine de travail agricole (1) selon l'une des revendications 8 à 9,
**caractérisée en ce que** l'angle de pivotement (63), dans une position de départ du second bouton de réglage (51), correspond au premier angle de rotation (61) du premier bouton de réglage (4), et, lorsque le second bouton de réglage (51) est tourné, à un angle de réglage résultant du premier angle de rotation (61) et du second angle de rotation (62) en particulier pondéré, du second bouton de réglage (62).

11. Machine de travail agricole (1) selon l'une des revendications 9 à 10,
**caractérisée en ce qu'**un moyen palpeur (43) perceptible au toucher est disposé sur le premier bouton de réglage (4) dans le premier angle de rotation (61) de celui-ci, de sorte que sa position sur le premier bouton de réglage (41) corresponde à l'angle de pivotement (63) préréglé du tube d'éjection (11).

12. Machine de travail agricole (1) selon l'une des revendications 9 à 11,
**caractérisée en ce qu'**elle est conçue de manière à ramener le tube d'éjection (11), lors du relâchement du second bouton de réglage (51), à l'angle de pivotement (63) préréglé par le premier bouton de réglage (41).

13. Machine de travail agricole (1) selon l'une des revendications 9 à 12,
**caractérisée en ce qu'**elle est conçue pour régler une vitesse et/ou une accélération du tube d'éjection (11) en fonction
• d'une vitesse d'actionnement du premier bouton de réglage (41),
• d'une vitesse d'actionnement du second bouton de réglage (51),
• d'une différence entre un angle de pivotement antérieur et un nouvel angle de pivotement (63),
• de caractéristiques du tube d'éjection (11), en particulier son poids, sa longueur et/ou sa hauteur par rapport au sol,
• de caractéristiques de la machine de travail agricole (1), en particulier sa vitesse de déplacement ou son sens de marche, et/ou
• d'autres caractéristiques pertinentes pour le fonctionnement, en particulier les conditions de vent et météorologiques.

14. Machine de travail agricole (1) selon l'une des revendications 9 à 13,
**caractérisée en ce que** le réglage de l'angle de pivotement (63) du tube d'éjection (11) s'effectue en fonction de courbes caractéristiques, dans lequel les courbes caractéristiques définissent une vitesse et/ou une accélération du tube d'éjection (1) lors du pivotement.

15. Procédé pour la commande d'un composant (11) d'une machine de travail (1), selon l'une des revendications 6 à 14, dans lequel ces revendications dépendent de l'une des revendications 3 à 5, dans lequel, pour le réglage grossier ou le préréglage du composant (11), un premier bouton de réglage (4) d'un levier d'actionnement (2) est tourné ou déplacé selon un premier angle de rotation (61), dans lequel le composant (11) est pivoté selon un angle de pivotement (63) correspondant au premier angle de rotation (61), et dans lequel, pour le réglage fin du composant (11), un second bouton de réglage (5) du levier d'actionnement (2) est tourné selon un second angle de rotation (62), dans lequel le composant (11) est pivoté, à partir de l'angle de pivotement (63) défini par le premier bouton de réglage (4), selon un angle de pivotement (63) correspondant au second angle de rotation (62).

16. Procédé selon la revendication 15, **caractérisé en ce que**, lorsque le second bouton de réglage (5) est relâché, le composant (11) revient à l'angle de pivotement (63) correspondant au premier angle de rotation (61) réglé.
